# EUROPEAN PATENT SPECIFICATION

(11) **EP 2 621 962 B1**
(45) Date of publication and mention of the grant of the patent: **10.09.2014**
(21) Application number: 11761369.5
(22) Date of filing: 26.09.2011
(51) Int. Cl.: C08F 10/02, C08F 2/34, C08F 2/00, C08F 4/649

(54) **POLYETHYLENE EXTRUDED ARTICLES**
STRANGGEPRESSTE POLYETHYLENARTIKEL
ARTICLES EXTRUDÉS EN POLYÉTHYLÈNE

(30) Priority: 23.09.2011 EP 11182427; 07.10.2010 US 404679 P; 07.10.2010 US 404706 P; 28.09.2010 EP 10181234; 28.09.2010 EP 10181136
(43) Date of publication of application: 07.08.2013
(73) Proprietor: Basell Polyolefine GmbH, 50389 Wesseling (DE)
(72) Inventor: BAITA, Pietro, I-45030 Occhiobello (IT); BRITA, Diego, I-44100 Ferrara (IT); FERRARI, Paolo, I-44122 Ferrara (IT); MAVRIDIS, Harilaos, Lebanon Ohio 45036 (US); MEI, Gabriele, I-44121 Ferrara (IT); PICA, Roberta, I-44121 Ferrara (IT); WIESECKE, Jens, 69123 Heidelberg (DE)
(74) Representative: Colucci, Giuseppe
(86) International application number: PCT/EP2011/066682
(87) International publication number: WO 2012/041813

(56) References cited:
- EP-A1- 1 308 464
- EP-A2- 1 939 229
- US-A1- 2007 027 275
- US-A1- 2009 203 863
- US-A1- 2010 167 058

## Description

The present invention relates to extruded articles made from polyethylene obtained from polymerization processes requiring the use of antistatic agents. More particularly, the invention relates to films produced with linear low density polyethylene (LLDPE).

Ethylene polymers are commercially produced via liquid phase (solution or slurry) or gas-phase processes. Both of the liquid and gas phase processes commonly employ an MgCl2-supported Ziegler-Natta catalyst.

In ethylene polymerization processes carried out in continuous, particularly in gas-phase processes for the preparation of LLDPE, there is the need to face up to the formation of polymer agglomerates in the polymerization reactor. The polymer agglomerates involves many negative effects: for example, they can disrupt the discharge of polymer from the reactor by plugging the polymer discharge valves. Furthermore, the agglomerates may also partially cover the fluidization grid of the reactor with a loss in the fluidization efficiency.

It had been found that the presence of fine polymer particles in the polymerization medium favors the formation of polymer agglomerates. These fines may be present as a result of introducing fine catalyst particles or breakage of catalyst and polymer particles within the polymerization medium. The fines are believed to deposit onto and electrostatically adhere to the inner walls of the polymerization reactor and the equipment for recycling the gaseous stream such as, for example, the heat exchanger. If the fines remain active, then the particles will grow in size resulting in the formation of agglomerates, also caused by the partial melting of the polymer itself. These agglomerates when formed within the polymerization reactor tend to be in the form of sheets. Agglomerates can also partially plug the heat exchanger designed to remove the heat of polymerization reaction.

Several solutions have been proposed to resolve the problem of formation of agglomerates during a gas-phase polymerization process. These solutions include the deactivation of the fine polymer particles, the control of the catalyst activity and, above all, the reduction of the electrostatic charge by introducing antistatic agents inside the reactor.

US 5,410,002, for example, discloses a polymerization process in which antistatic compounds are used to eliminate or reduce the build-up of polymer particles on the walls of a gas-phase polymerization reactor. Said antistatic compounds are capable of selectively inhibiting the polymerization on polymer particles smaller than 850 µm, the latter being responsible for fouling problems and polymer sheeting. Those antistatic/anti-fouling compounds are preferably selected among alkydiethanolamines. In particular, in examples 12 and 13 a LLDPE was prepared by using as anti-fouling compound Atmer 163, a commercial N-alkyl diethanolamine. Nothing is said about the intended use of the obtained LLPDE, or about any effect of anti-fouling compounds in the properties of manufactured items obtainable from those LLPDE.

Document EP 1 308 464 relates to a gas phase process for the polymerisation of olefins such as ethylene. The polymer can be a low density polyethylene. The polymerisation is carried out in the presence of an antistatic agent such as a glycerol ester or a sorbitan ester of a fatty acid, for example a monolaurate, monostearate of a monooleate ester.

Document EP 1 939 229 discloses a gas phase process for the polymerisation of olefins such as ethylene in which antistatic agents which are different from the present esterified polyalcohol are used. Those antistatic agents are for example polyamines such as Atmer 163, which is used in present comparative example 1, or polysulfones such as Costelan AS100 used in present comparative example 2. The polymers are used to prepare extruded objects such as films.

The present inventors had found that extruded articles produced with polyethylene containing antistatic compounds show worsened optical properties, particularly haze. It would thus be desirable to improve the optical properties of those films. It has now been found that those and other results can be achieved by selecting an appropriate class of antistatic compounds.

Thus, according to a first aspect, the present invention provides an extruded article comprising a polyethylene obtained by a polymerization process carried out in the presence of the products obtained by contacting the following components:
(a) a solid catalyst component comprising a magnesium halide, a titanium compound having at least a Ti-halogen bond and optionally one or more internal electron donor compounds,
(b) one or more aluminum hydrocarbyl compound,
(c) optionally an external electron donor compound, and
(d) a polyalcohol partially esterified with carboxylic acids of the following formula (I):

   R-COOH (I)

   wherein R is an alkyl group containing at least 10 carbon atoms.

The preferred partially-esterified polyalcohols for use according to the present invention are those belonging to the group of the following formula (II):

H - (CHR₁)n-H (II)

wherein:
- R₁ is independently H, OH or OCOR, at least one, preferably at least two, being OH and at least one being OCOR,
- R is defined as in formula (I), namely is an alkyl group, preferably linear, containing at least 10 carbon atoms, preferably 10-20 carbon atoms, and
- n is an integer higher than 2, preferably higher that 3, more preferably comprised between 3 and 10.

A particularly preferred class of polyalcohols for use according to the present invention are the compounds obtained by the partial esterification of glycerin with saturated fatty acids having at

least ten carbon atoms, such as lauric acid, myristic acid, palmitic acid, stearic acid, the latter being particularly preferred. Most preferred are the monoesters of glycerin. Examples of such compounds are glycerol monolaurate, glycerol monomyristate, glycerol monopalmitate, glycerol monostearate, the latter being particularly effective.

In the solid catalyst component (a), preferred Ti compounds containing at least a Ti-halogen bond are the titanium tetrahalides or the Ti-compounds of formula TiXₙ(OR¹)₄₋ₙ, where 0<n≤3, X is halogen, preferably chlorine, and R¹ is C₁-C₁₀ hydrocarbon group. Titanium tetrachloride is the preferred titanium compound.

Preferably, the solid catalyst component (a) contains also an internal donor which is preferably selected from aliphatic or aromatic monoethers and aromatic or aliphatic esters of aromatic or aliphatic mono or polycarboxilic acids. In particular, preferred ethers are the C2-C20 aliphatic ethers and, among them, particularly preferred are the cyclic ethers having 3-5 carbon atoms. Specific preferred ethers are tetrahydrofurane, tetrahydropirane and dioxane, tetrahydrofurane being the most preferred. Preferred esters are the C1-C10 alkyl esters of C1-C20, preferably C1-C10, aliphatic monocarboxylic acids and the C1-C10 alkyl esters of C7-C20 aromatic monocarboxilic acids. Particularly preferred esters are ethyl acetate, ethyl benzoate, n-butylbenzoate, isobutylbenzoate, ethyl p-toluate, ethyl acetate being the most preferred. Preferably in the solid catalyst component (a) the internal donor/Ti molar ratio is higher than 3, and preferably ranges from 3.5 to 20, while in a most preferred embodiment it ranges from 4 to 15.

The Mg/Ti molar ratio preferably ranges from 7 to 120, more preferably from 10 to 100 and especially from 10 to 50.

Magnesium halide is preferably Magnesium dichloride which can be pre-formed or formed during the catalyst preparation. Particularly preferred is the use of MgCl₂ in an active form. Using an active form of. MgCl₂ to support Ziegler-Natta catalysts is known. See, for example, U.S. Pat. Nos. 4,298,718 and 4,495,338.

The preferred general method for the preparation of catalyst component (a) preparation is that disclosed in U.S. Pat. No. 7,592,286. According to this method, the catalyst is preferably prepared by first contacting the Ti-halogen compound with MgCl₂ precursor to obtain an intermediate product which is then contacted with the suitable amount of internal donor. The so obtained catalyst is then washed with the solvent to yield the final Ziegler-Natta catalyst. More details of the catalyst preparation is disclosed in the examples of this application.

Additional preferred supported catalysts are those disclosed in the International application WO 2012/025379. The supported catalyst is preferably characterized by an X-ray diffraction spectrum which, in the range of 20 diffraction angles between 5.0° and 20.0°, has at least three main diffraction peaks: 20 of 7.2 ± 0.2°, and 11.5 ± 0.2°, and 14.5 ± 0.2°, respectively. Preferably, the peak at 20 of 7.2 ± 0.2° is most intense and the peak at 11.5 ± 0.2° has an intensity less than 90% of the intensity of the peak at 20 of 7.2 ± 0.2°.

The so obtained catalyst component can be used as such or it can undergo a post-treatment with particular compounds suitable to impart to it specific properties.

An example of treatment that can be carried out on the intermediate is a pre-polymerization step. The pre-polymerization can be carried out with any of the olefins CH₂=CHR, where R is H or a C₁-C₁₀ hydrocarbon group. In particular, it is especially preferred to pre-polymerize ethylene or propylene or mixtures thereof with one or more α-olefins, said mixtures containing up to 20% in moles of α-olefin, forming amounts of polymer from 0.1 g up to 1000 g per gram of solid intermediate, preferably from 0.5 to 500 g per gram per gram of solid intermediate.

.Suitable aluminum hydrocarbyl compounds for use as cocatalyst component (b) include trialkylaluminums, alkylaluminum halides, and mixtures thereof. Examples of trialkylaluminums include trimethylaluminum (TMA), triethylaluminum (TEAL), triisobutylaluminum (TIBA), tri-n-butylaluminum, tri-n-hexylaluminum, tri-n-octylaluminum, and mixtures thereof Examples of alkylaluminum halides include diethylaluminum chloride (DEAC), diisobutylaluminum chloride, aluminum sesquichloride, dimethylaluminum chloride (DMAC), and mixtures thereof. TEAL/DEAC and TIBA/DEAC mixtures are particularly preferred.

An additional electron donor (i.e. external donor) can also be added as a component (c) to form the final catalyst for the (co)polymerization. The use of an external donor is particularly preferred when the internal donor is absent or selected among esters of aliphatic or aromatic mono or polycarboxylic acids. The external donors are preferably selected from the group consisting of ethers, esters, amines, ketones, nitriles, silanes, and mixtures thereof. Use of aliphatic ethers and in particular of tetrahydrofurane is especially preferred.

The above mentioned components (a)-(c) can be fed separately into the reactor where, under the polymerization conditions can exploit their activity. It constitutes however a particular advantageous embodiment the pre-contact of the above components, optionally in the presence of small amounts of olefins, for a period of time ranging from 1 minute to 10 hours, preferably in the range from 2 to 7 hours. The pre-contact can be carried out in a liquid diluent at a temperature ranging from 0 to 90°C preferably in the range of 20 to 70°C.

One or more alkyl aluminium compound or mixtures thereof can be used in the precontact. If more than one alkylauminum compound is used in the precontact, they can be used altogether or added sequentially to a pre-contact tank. Even if the pre-contact is carried out it is not necessary to add at this stage the whole amount of aluminium alkyl compounds. A portion thereof can be added in the pre-contact while the remaining aliquot can be fed to the polymerization reactor. Moreover, when more than one aluminium alkyl compound is used, it is also possible using one or more in the pre-contact and the other(s) fed to the polymerization reactor.

Polyethylene is divided into high density (HDPE, density 0.941 g/cm3 or greater), medium density (MDPE, density from 0.926 to 0.940 g/cm3), low density (LDPE, density from 0.910 to 0.925 g/cm3) and linear low density polyethylene (LLDPE, density from 0.910 to 0.925 g/cm³). See ASTM D4976-98: Standard Specification for Polyethylene Plastic Molding and Extrusion Materials.

In particular, LLDPE resins are copolymers of ethylene with generally from 3 to 15 wt% of alpha-olefin comonomers such as 1-butene, 1-hexene, and 1-octene. The main use of LLDPE is in film applications, including produce bags, garbage bags, stretch wrap, industrial liners, clarity films such as bread bags, and collation shrink films.

Suitable C3-10 alpha-olefin comonomers include propylene, 1-butene, 1-hexene, and 1-octene, and mixtures thereof. Preferably, the alpha-olefin is 1-butene, 1-hexene, or a mixture thereof. The amount of alpha-olefin used depends on the density of LLDPE desired. Generally, the alpha-olefin is used in an amount within the range of 3 to 15 wt%. The density of LLDPE for use in preparing the extruded articles of the invention is preferably within the range of 0.865 to 0.940 g/cm3, more preferably within the range of 0.910 to 0.940 g/cm3, and most preferably within the range of 0.915 to 0.935 g/cm3.

Preferably, the copolymerization is carried out in one or more polymerization reactors, of which at least one reactor operates in gas phase. The gas phase reactor can be agitated or fluidized. The gas phase polymerization is preferably performed in the presence of hydrogen and hydrocarbon solvents. Hydrogen is used to control the molecular weight of the ethylene polymers. The ethylene polymers preferably have a melt index MI2 within the range of 0.1 to 10 dg/min, and more preferably within the range of 0.5 to 8 dg/min. A particularly preferred ethylene polymer is an LLDPE copolymer of ethylene and 1-butene having 1-butene content within the range of 5 to 10 wt%. The ethylene-1-butene copolymer preferably has a density from 0.912 to 0.925 g/cm3 and, more preferably, from 0.915 to 0.920 g/cm3. The ethylene-1-butene copolymer preferably has an MI2 within the range of 0.5 to 15 dg/min and, more preferably, from 1 to 10 dg/min. Preferably, the hydrocarbon solvent has a boiling point higher than the boiling point of ethylene and alpha-olefin comonomer. Examples of suitable solvents include toluene, xylene, propane, pentane, hexane, and mixtures thereof. The solvent condenses during the polymerization. It thereby removes heat from the polymerization and helps to keep the monomers in the gas phase reactor. Optionally, the gas phase polymerization is performed in the presence of an inert gas such as nitrogen and carbon dioxide.

In another embodiment, the process is performed in two gas-phase reactors in series. The catalyst is continuously fed to the first reactor, either directly, or through one or more pre-activation devices. The gas phase of the first reactor preferably comprises ethylene, one or more alpha-olefin comonomers, hydrogen, and a hydrocarbon solvent. Monomers and other components are continuously fed to the first reactor to maintain the reactors pressure and gas phase composition essentially constant. A product stream is withdrawn from the first gas phase reactor and fed to the second. The gas phase in the second reactor preferably differs from the first reactor so that the LLDPE made in the second reactor differs from the LLDPE made in the first reactor in either composition or molecular weight, or both. The end product stream, which comprises the LLDPE made from the first and the second reactors, is withdrawn from the second reactor.

Preferred extruded articles according to the present invention are LLPDE films. Such LLDPE films exhibit better optical properties, notably haze but also gloss, with respect to those produced with LLDPE containing antistatic compounds used before the present invention. The films of the present invention can be used in many applications. They are particularly useful in the manufacturing of films for bags, consumer goods and food packaging as well as industrial packaging, in which the film optical properties have a significant impact.

Other extruded articles according to the invention include MDPE and HDPE films, sheets, pipes and bottles.

Methods for making LLDPE films are known. For example, the blown film process can be used to produce biaxially oriented shrink films. In the process, LLDPE melt is fed by an extruder through a die gap (0.025 to 0.100 in) in an annular die to produce a molten tube that is pushed vertically upward. Pressurized air is fed to the interior of the tube to increase the tube diameter to give a "bubble." The volume of air injected into the tube controls the size of the tube or the resulting blowup ratio, which is typically 1 to 3 times the die diameter. In low stalk extrusion, the tube is rapidly cooled by a cooling ring on the outside surface and optionally also on the inside surface of the films. The frost line height is defined as the point at which the molten extrudate solidifies. This occurs at a height of approximately 0.5-4 times the die diameter. The draw down from the die gap to the final film thickness and the expansion of the tube diameter result in the biaxial orientation of the film that gives the desired balance of film properties. The bubble is collapsed between a pair of nip rollers and wound onto a film roll by the film winder. Collapsing of the tube is done after initial cooling at a point so that the wall surfaces will not adhere to one another.

The thickness of the films of the present invention is generally lower than 35 µm, preferably comprised between 10 µm and 70 µm.

It has been noted that the extruded articles, particularly the films, of the present invention can be obtained due to the improvement in the process for the preparation of the ethylene polymers, particularly the LLDPE, starting material consisting in the selection of a particular class of compounds that, beside showing antistatic/antifouling properties, are also able to positively influence the characteristics of the catalysts used in the polymerization process.

The following examples merely illustrate the present invention, without any limiting purpose.

### Methods

The characterization data for the LLDPE and for the obtained films were obtained according to the following methods:

### Particle size distribution (PSD) of catalyst powder

The analysis of the catalyst particle size distribution was carried out with a laser analyzer model Malvern Instrument 2600. With this instrument, the measurement of the diameter distribution of single solid catalyst particles is based on the principle of optical diffraction of monochromatic laser light. The field of the instrument, correred through three different lenses, is 2-564 µm.

The analysis comprises the addition of the sample, under nitrogen flow, to a measure cell containing hexane and provided with a stirrer and with a circulation pump having a flow rate comprised between 70 and 100 l/h. The measure is performed while the suspension is circulated. The central process unity of the analyzer processes the received signals and calculates the particle size distribution (PSD) of the sample on different diameter groups.

### Density:

Determined according to ASTM-D1505.

### Melt index E (MIE)

Determined according to ASTM-D1238, condition 190°C/2.16 kg.

### Haze

Determined according to ASTM-D1003.

### Gloss

Determined according to ASTM-D2457.

### Examples

### Example 1

### Preparation of the solid catalyst component

The solid catalytic component is a Ziegler-Natta catalyst powder comprising a titanium tetrachloride compound supported on a magnesium chloride, containing ethylacetate as internal donor and prepared in accordance with the procedure described in Example 14 of U.S. Pat. No. 7,592,286.,.

This solid catalytic component had a particle average size of 46 µm and a particle size distribution between 43 and 50 µm.

In a dispersion tank with an internal diameter of 14,5 cm equipped with a stirrer, an external water jacket for the temperature regulation, a thermometer and a cryostat, the following components are introduced to prepare a catalyst suspension:
- the above indicated Ziegler Natta catalyst powder;
- white oil OB22 AT having a density of 0,844 g/cm³ and dynamic viscosity of 30 cPs at 20°C;
- microbeads of glycerol monostearate (GMS90, melting point 68°C) with an average diameter of 336 µm, and a particle size distribution between 150 and 600 µm.

1091 g of white oil OB22 are fed into the dispersion tank at room temperature (25°C). Successively, 100 g of catalyst powder and 80 g of microbeads of GSM90 are loaded to the tank containing the oil, while maintaining under stirring the dispersion tank.

Once completed the feed of catalyst and GMS90, the obtained suspension is maintained under stirring conditions for 30 minutes adjusting the temperature of the dispersion tank at 13°C: the velocity of the stirring device is adjusted to 85 rpm during the mixing of the components of the suspension.

The obtained suspension has a catalyst concentration of about 77 g/l (grams of catalyst for liter of oil) and contains the antistatic compound in a weight ratio GMS90/catalyst of 0,8.

467 g of molten vaseline grease BF (melting point =60°C; density=0,827 g/cm³) are fed to the dispersion tank containing the catalyst suspension at a feed temperature of 80°C. That molten thickening agent is slowly fed to the catalyst suspension in a time of 3 minutes, while maintaining the suspension under stirring conditions. The catalyst suspension is maintained at a temperature of 13°C during the addition of the molten vaseline grease: as a consequence, the molten thickening agent solidifies almost instantaneously on contact with the catalyst suspension. After the feed of the molten vaseline, the components of the catalytic paste are maintained under stirring conditions at a velocity of 85 rpm for a time of 90 minutes. During this time the temperature inside the dispersion tank is kept at 13°C: at this temperature, the catalytic paste is still sufficiently fluid to be discharged from the dispersion tank by means of a dosing syringe. The obtained catalytic paste has a grease/oil weight ratio of about 0,43 while the concentration of the solid (catalyst+antistatic) in the catalytic paste is equal to about 90 g/l.

### Catalyst Activation

The obtained catalytic paste is withdrawn by the dispersion tank by a dosing syringe and is then continuously transferred by means of two dosing syringes to a catalyst activation vessel.

A mixture of triisobutyl-aluminium (TIBAL) and diethyl-aluminum chloride (DEAC) in a weight ratio 7:1 is used the catalyst activator, while tetrahydrofurane (THF) is used as the external donor compound. These components are introduced into the activation vessel with the following amounts:
- weight ratio (TIBAL+DEAC)/catalyst = 10,0;
- weight ratio (TIBAL+DEAC)/THF = 40,0;

Propane is also fed to the activation vessel as diluent. The above components are contacted for a time of 70 minutes at a temperature of 40°C.

The activated catalytic paste is discharged from the activation vessel and is continuously fed to a fluidized bed reactor for the polymerization of olefins.

### Polymerization

The activated catalytic paste is introduced into the fluidized bed reactor, where ethylene is copolymerized with 1-butene to produce linear low density polyethylene (LLDPE). The polymerization is operated in the presence of propane as a polymerization diluent and hydrogen as the molecular weight regulator.

The composition of the gaseous reaction mixture is: 30% mol of ethylene, 16% mol of 1-butene, 7,5% mol of hydrogen and 46,5% mol of propane.

The ethylene/1-butene polymerization is carried out at a temperature of 80°C and a pressure of 25 bar.

The LLDPE copolymer discharged from the reactor shows a density of 0,918 g/cm³ and a melt index MIE of 1,0 g/10min.

### Preparation of film

Blown films for the examples of Table 1 are produced on a blown film line equipped with a 2" diameter smooth-bore extruder, 24:1 L/D barrier screw and a 4" diameter spiral mandrel die with a 0.100" die gap. Blown film fabrication conditions include an output rate of 63lb/hr, melt temperature of 215-220°C, Blow-Up-Ratio of 2.5, frostline height of 12" and film thickness of 1 mil (25 microns).

The haze of the film is 14%. The 45° gloss of the film is 43%.

### Comparative Example 1

A LLDPE was prepared in the same manner as Example 1, except that Atmer 163 was used in place of GMS. The LLDPE copolymer discharged from the reactor shows a density of 0,922 g/cm³ and a melt index MIE of 1,0 g/10min.

A film was prepared in the same manner as Example 1. The haze of the film is 22%. The 45° gloss of the film is 27%.

### Comparative Example 2

A LLDPE was prepared in the same manner as Example 1, except that Costelan AS100 was used in place of GMS and that the weight ratio (TIBAL+DEAC)/THF = 20,0. The LLDPE copolymer discharged from the reactor shows a density of 0,919 g/cm³ and a melt index MIE of 1,0 g/10min. A film was prepared in the same manner as Example 1. The haze of the film is 19%. The 45° gloss of the film is 36%.

## Claims

1. An extruded article comprising a polyethylene obtained by a polymerization process carried out in the presence of the products obtained by contacting the following components:
(a) a solid catalyst component comprising a magnesium halide, a titanium compound having at least a Ti-halogen bond and optionally one or more internal electron donor compounds,
(b) one or more aluminum hydrocarbyl compound,
(c) optionally an external electron donor compound, and
(d) a polyalcohol partially esterified with carboxylic acids of the following formula (I):
R-COOH (I)
wherein R is an alkyl group containing at least 10 carbon atoms.

2. The extruded article according to claim 1, wherein the polyalcohol is selected among those belonging to the group of the following formula (II):
H-(CHR₁)n-H (II)
wherein:
- R₁ is independently H, OH or OCOR, at least one, preferably at least two, being OH and at least one being OCOR,
- R is an alkyl group, preferably linear, containing at least 10 carbon atoms, preferably 10-20 carbon atoms, and
- n is an integer higher than 2, preferably higher that 3, more preferably comprised between 3 and 10.

3. The extruded article according to any of the preceding claims, wherein the polyalcohol is selected among the compounds obtained by the partial esterification of glycerin with saturated fatty acids having at least ten carbon atoms

4. The extruded article according to any of the preceding claims, wherein the polyalcohol is selected among the monoesters of glycerin.

5. The extruded article according to any of the preceding claims, wherein the polyalcohol is glycerol monostearate.

6. The extruded article according to any of the preceding claims, wherein the polyethylene is a linear low density polyethylene.

7. The extruded article according to any of the preceding claims, being a film.

## Patentansprüche

1. Extrudierter Artikel, umfassend ein Polyethylen, das durch ein Polymerisationsverfahren erhalten wird, das in Gegenwart der Produkte durchgeführt wird, die durch Inkontaktbringen der folgenden Komponenten erhalten werden:
(a) einer festen Katalysatorkomponente, umfassend ein Magnesiumhalogenid, eine Titanverbindung mit mindestens einer Ti-Halogenbindung und gegebenenfalls eine oder mehr Elektronendonatorverbindung(en),
(b) einer oder mehr Aluminiumhydrocarbylverbindung(en),
(c) gegebenenfalls einer externen Elektronendonatorverbindung, und
(d) eines mit Carbonsäuren der folgenden Formel (I) teilveresterten Polyalkohols:
R-COOH (I)
wobei R eine Alkylgruppe mit mindestens 10 Kohlenstoffatomen ist.

2. Extrudierter Artikel nach Anspruch 1, wobei der Polyalkohol unter denen ausgewählt ist, die zur Gruppe der folgenden Formel (II) gehören:
H - (CHR₁)n-H (II)
wobei:
- R₁ unabhängig H, OH oder OCOR ist, wobei mindestens eines, bevorzugt mindestens zwei OH ist/sind und mindestens eines OCOR ist,
- R eine Alkylgruppe, bevorzugt linear, mit mindestens 10 Kohlenstoffatomen, bevorzugt 10 bis 20 Kohlenstoffatomen ist, und
- n eine ganze Zahl höher als 2, bevorzugt höher als 3, bevorzugter zwischen 3 und 10 ist.

3. Extrudierter Artikel nach einem der vorangehenden Ansprüche, wobei der Polyalkohol unter den Verbindungen ausgewählt ist, die durch die Teilveresterung von Glycerin mit gesättigten Fettsäuren mit mindestens zehn Kohlenstoffatomen erhalten werden.

4. Extrudierter Artikel nach einem der vorangehenden Ansprüche, wobei der Polyalkohol unter den Glycerolmonoestern ausgewählt ist.

5. Extrudierter Artikel nach einem der vorangehenden Ansprüche, wobei der Polyalkohol Glycerolmonostearat ist.

6. Extrudierter Artikel nach einem der vorangehenden Ansprüche, wobei das Polyethylen ein lineares Polyethylen niederer Dichte ist.

7. Extrudierter Artikel nach einem der vorangehenden Ansprüche, der eine Folie ist.

## Revendications

1. Objet extrudé comprenant un polyéthylène obtenu par un procédé de polymérisation réalisé en présence de produits obtenus par mise en contact des constituants suivants :
(a) un constituant catalytique solide comprenant un halogénure de magnésium, un composé de titane présentant au moins une liaison Ti-halogène et éventuellement un ou plusieurs composés donneurs d'électrons internes,
(b) un ou plusieurs composés aluminium-hydrocarbyle,
(c) éventuellement un composé donneur d'électrons externe, et
(d) un polyalcool partiellement estérifié par des acides carboxyliques de formule (I) suivante :
R-COOH (I)
dans laquelle R représente un groupe alkyle contenant au moins 10 atomes de carbone.

2. Objet extrudé selon la revendication 1, dans lequel le polyalcool est choisi parmi ceux appartenant au groupe de formule (II) suivante :
H - (CHR₁)ₙ-H (II)
dans laquelle
- R₁ représente indépendamment H, OH ou OCOR, au moins un, de préférence au moins deux, représentant OH et au moins un représentant OCOR,
- R représente un groupe alkyle, de préférence linéaire, contenant au moins 10 atomes de carbone, de préférence 10-20 atomes de carbone, et
- n représente un entier supérieur à 2, de préférence supérieur à 3, plus préférablement compris entre 3 et 10.

3. Objet extrudé selon l'une quelconque des revendications précédentes, dans lequel le polyalcool est choisi parmi les composés obtenus par l'estérification partielle de glycérol à l'aide d'acides gras saturés présentant au moins dix atomes de carbone

4. Objet extrudé selon l'une quelconque des revendications précédentes, dans lequel le polyalcool est choisi parmi les monoesters de glycérol.

5. Objet extrudé selon l'une quelconque des revendications précédentes, dans lequel le polyalcool est le monostéarate de glycérol.

6. Objet extrudé selon l'une quelconque des revendications précédentes, dans lequel le polyéthylène est un polyéthylène linéaire basse densité.

7. Objet extrudé selon l'une quelconque des revendications précédentes, consistant en un film.
